# EUROPEAN PATENT SPECIFICATION

(11) **EP 4 148 662 B1**
(45) Date of publication and mention of the grant of the patent: **16.07.2025**
(21) Application number: 20934707.9
(22) Date of filing: 08.05.2020
(51) Int. Cl.: G06T 7/00, G06V 10/80, G06V 10/70, G06V 10/82, G06V 40/16

(54) **IDENTIFICATION METHOD, GENERATION METHOD, IDENTIFICATION PROGRAM, AND IDENTIFICATION DEVICE**
IDENTIFIKATIONSVERFAHREN, ERZEUGUNGSVERFAHREN, IDENTIFIKATIONSPROGRAMM UND IDENTIFIKATIONSVORRICHTUNG
PROCÉDÉ D'IDENTIFICATION, PROCÉDÉ DE GÉNÉRATION, PROGRAMME D'IDENTIFICATION ET DISPOSITIF D'IDENTIFICATION

(43) Date of publication of application: 15.03.2023
(73) Proprietor: FUJITSU LIMITED, Kawasaki-shi, Kanagawa 211-8588 (JP)
(72) Inventor: MATSUNAMI, Tomoaki, Kawasaki-shi, Kanagawa 211-8588 (JP)
(74) Representative: Hoffmann Eitle
(86) International application number: PCT/JP2020/018748
(87) International publication number: WO 2021/225001

(56) References cited:
- JP-A- 2004 294 360
- JP-A- 2011 510 420
- JP-A- 2018 198 056
- JP-A- H05 303 642
- JP-A- H05 303 642
- US-A1- 2008 166 026
- US-A1- 2020 042 796

## Description

### FIELD

The present invention relates to an identification method, a generation method, an identification program, and an identification device.

### BACKGROUND

Biometric authentication technologies have an aspect used to identify a group to which a biometric image belongs. As an example, authenticity determination, in a face authenticity technology, for determining whether or not an acquired face image is an actual face, a photograph, a face on a screen, or printed matters, attribute estimation for estimating a gender, an age, a pupil color, of a target person are exemplified. However, it is not possible to necessarily acquire the face image in a unified environment, and is acquired under an environment with a difference of a light source or a different reflection degree. Therefore, there is an aspect of decreasing identification accuracy.

The following three related arts 1 to 3 have been proposed merely as examples of a technology for reducing an effect of such different acquisition environments. For example, first, related art 1 that performs retraining for extracting sample data having a short distance to the cluster center for each estimation result cluster each time when attribute estimation is performed on an input face image and updating an attribute estimation model after adding correct answer data. Second, related art 2 acquires information indicating an imaging environment at the time when a face image is acquired and generates a training model or performs attribute estimation using a pseudo site image that reflects the imaging environment generated by processing data of the face image according to the imaging environment. Third, related art 3 generates a suspiciousness estimation model based on a result of clustering a face image and suspiciousness information that is associated with the face image in advance and estimates suspiciousness of a target person using suspiciousness information corresponding to a cluster that is a result of clustering an input face image.

### CITATION LIST

### PATENT DOCUMENT

Patent Document 1: Japanese Laid-open Patent Publication No. 2012-208710
Patent Document 2: Japanese Laid-open Patent Publication No. 2013-242825
Patent Document 3: International Publication Pamphlet No. WO 2018/128015

### SUMMARY

### [TECHNICAL PROBLEM]

However, the technologies described above have an aspect that it is still difficult to suppress a decrease in accuracy of group identification in an unknown environment.

For example, in the related art 1 described above, in a case where the attribute estimation model is used in an unknown environment, a model with low accuracy is used before retraining is performed. Furthermore, in the related art 2 described above, in a case where an acquisition environment of a usage scene is unknown or in a case where a face image is acquired under an unexpected environment, due to an aspect that it is difficult to properly process the face image, the accuracy of the attribute estimation may be decreased. Moreover, in the related art 3, the clustering result is associated with the suspiciousness estimation model in a one-to-one manner, since the suspiciousness estimation model associates an image included in each cluster with the suspiciousness information, a suspiciousness estimation result depends on the clustering result. Therefore, in a case of images of the same person imaged in different environments, the clustering results differ, and there is a case possibility that the suspiciousness estimation results vary.

Patent document US 2020/0042796 A1 is further prior art and discloses an artificial intelligence apparatus for recognizing an object using a compound recognition model composed of a plurality of recognitions models, each contributing with a respective weight to the compound model.

In one aspect, an object is to suppress a decrease in accuracy of group identification in an unknown environment.

### [SOLUTION TO PROBLEM]

The invention is set out in the independent claims. In one aspect, a computer executes processing including generating each of a plurality of first estimated values regarding an attribute of a received face image using a plurality of estimation models that generates the first estimated value regarding the attribute of the face image from the face image when receiving the face image, generating a plurality of pieces of similarity information that indicates a similarity between a plurality of pieces of feature information respectively associated with the plurality of estimation models and feature information of the received face image, and generating a second estimated value regarding the attribute of the received face image based on the plurality of generated first estimated values regarding the attribute of the face image and the plurality of pieces of generated similarity information.

According to an aspect of the embodiments, an identification method for causing a computer to execute processing comprising: generating each of a plurality of first estimated values regarding an attribute of a received face image by using a plurality of estimation models that generates the first estimated value regarding the attribute of the face image from the face image when receiving the face image and to generate a plurality of pieces of similarity information that indicates a similarity between a plurality of pieces of feature information respectively associated with the plurality of estimation models and feature information of the received face image; and
generating a second estimated value regarding the attribute of the received face image, based on the plurality of generated first estimated values regarding the attribute of the face image and the plurality of pieces of generated similarity information.

### [ADVANTAGEOUS EFFECTS OF INVENTION]

It is possible to suppress a decrease in accuracy of group identification in an unknown environment.

### BRIEF DESCRIPTION OF DRAWINGS

FIG. 1 is a block diagram illustrating an example of a functional configuration of each device included in a system according to a first embodiment;
FIG. 2 is a diagram illustrating an example of a first score for each group label;
FIG. 3 is a diagram illustrating an example of an overall flow of a generation device according to the first embodiment;
FIG. 4 is a diagram illustrating an example of a subflow of the generation device according to the first embodiment;
FIG. 5 is a diagram illustrating an example of an overall flow of an identification device according to the first embodiment; and
FIG. 6 is a diagram illustrating a hardware configuration example of a computer.

### DESCRIPTION OF EMBODIMENTS

Hereinafter, an identification method, a generation method, an identification program, and an identification device according to the present application will be described with reference to the drawings. Note that the embodiments do not limit the disclosed technology. Then, each of the embodiments may be suitably combined within a range without causing contradiction between processing content.

### [First Embodiment]

### [System Configuration]

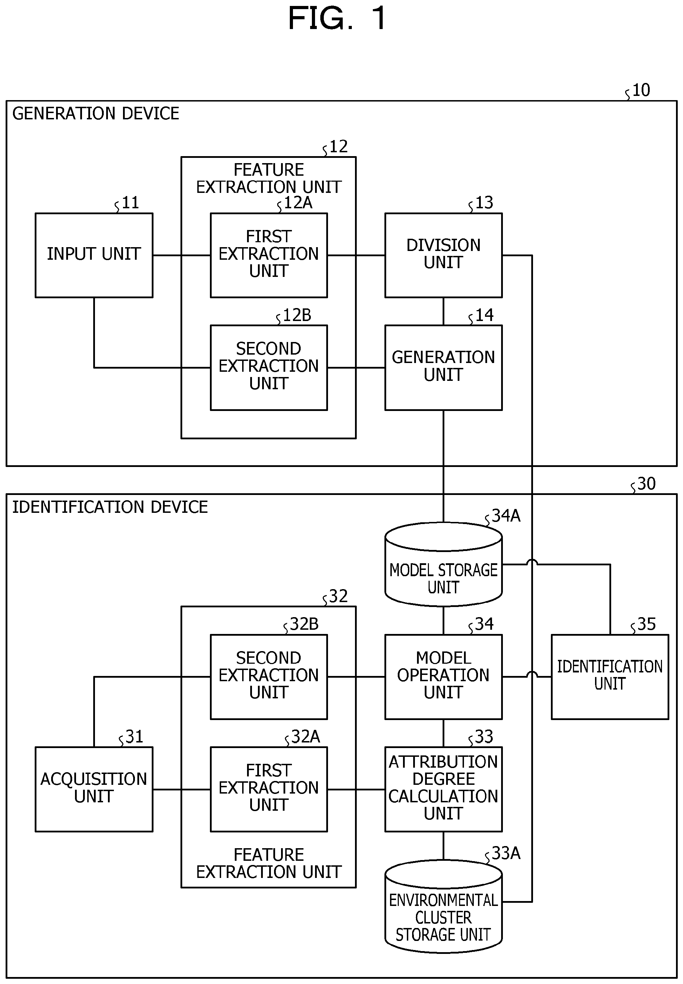

FIG. 1 is a block diagram illustrating an example of a functional configuration of each device included in a system according to a first embodiment. A system 1 illustrated in FIG. 1 has a group identification function for identifying a group to which a biometric image belongs. Merely as an example of such group identification, authenticity determination for determining whether or not a face image corresponding to an example of the biometric image is an actual face, a photograph, a face on a screen, or printed matters, attribute estimation for estimating a gender, an age, or a pupil color of a target person are exemplified.

As illustrated in FIG. 1, a generation device 10 and an identification device 30 may be included. Here, merely as an example, in FIG. 1, a system is illustrated as an example in which two machines including the generation device 10 and the identification device 30 are separately constructed. The generation device 10 and the identification device 30 may be communicably connected via any network regardless of whether the network is wired or wireless.

The generation device 10 is an example of a computer that has a model generation function for generating a group identification model used for the group identification function described above. The identification device 30 is an example of a computer that has the group identification function described above.

The generation device 10 and the identification device 30 install a generation program for realizing the model generation function described above and an identification program for realizing the group identification function described above as package software or online software into an arbitrary computer so as to implement the programs. By causing the computer to execute the generation program or the identification program installed in this way, the computer can be caused to function as the generation device 10 or the identification device 30.

### [Configuration of Generation Device 10]

First, a functional configuration of the generation device 10 according to the present embodiment will be described. As illustrated in FIG. 1, the generation device 10 includes an input unit 11, a feature extraction unit 12, a division unit 13, and a generation unit 14. Note that the generation device 10 may include various functional units included in a known computer in addition to the functional units illustrated in FIG. 1, for example, functional units such as various input devices or audio output devices.

The functional units illustrated in FIG. 1, for example, the functional units such as the input unit 11, the feature extraction unit 12, the division unit 13, or the generation unit 14 are virtually realized by a hardware processor below, merely as an example. As an example of such a processor, a central processing unit (CPU), a micro processing unit (MPU), or the like are exemplified. Not limited to these general-purpose processors, a deep learning unit (DLU), general-purpose computing on graphics processing units (GPGPU), a GPU cluster, or the like may be used. For example, the processor develops the generation program described above as a process on a memory such as a random access memory (RAM) so that the functional units described above are virtually realized. Here, as an example of the processor, the DLU, the GPGPU, the GPU cluster, the CPU, and the MPU are exemplified. However, the functional units described above may be realized by any processor regardless of whether the processor is a general-purpose type or specialized type. Additionally, the functional unit described above is not prevented from being realized by a hard wired logic such as an application specific integrated circuit (ASIC) or a field programmable gate array (FPGA).

The input unit 11 is a processing unit that inputs training data including a face image with a group label. Hereinafter, an example will be described in which a face image is used for group identification, merely as an example of the biometric image. For example, when authenticity determination is used as an example, a correct group label out of two types of group labels including a true label and a false label is added to the face image. Furthermore, when attribute estimation or age estimation is used as an example, a correct group label among a plurality of group labels including 20s, 30s, 40s, 50s, or the like is added to the face image. Moreover, a group label in which a plurality of attributes is combined can be added. For example, a group label in which an age and a gender are combined as a man in his 20s, a woman in her 20s, a man in his 30s, a woman in her 30s,... may be added to the face image. Note that the number of samples included in the training data, that is, the number of face images with a group label may be any number that is one or plural. Furthermore, the face of the same person may be included in the face image, or every face included in the face image may be different.

Merely as an example, the input unit 11 can activate the model generation function described above under a condition that a group identification model generation request is received. As a result, machine learning (training) of the group identification model starts. As an example, the generation request described above can be received via a user interface (not illustrated) or a communication interface (not illustrated). Here, an example has been described in which the model generation function is activated under the condition that the group identification model generation request is received. However, the model generation function can be activated under other conditions. For example, a condition may be used that the face image with the group label is input to the generation device 10, or a condition may be used that a certain time, for example, 12 o'clock, 18 o'clock, or the like comes. Note that the face image with the group label may be acquired from an internal storage or a removable medium (not illustrated) or, alternatively, may be acquired from an external device via a network.

The feature extraction unit 12 is a processing unit that extracts feature information from the biometric image input by the input unit 11. As illustrated in FIG. 1, the feature extraction unit 12 includes a first extraction unit 12A and a second extraction unit 12B.

The first extraction unit 12A is a processing unit that extracts first feature information from the face image input by the input unit 11. Here, the first feature information has an aspect used for clustering by the division unit 13 to be described later, in order to perform classification into clusters in an environment where a face image is acquired. From such an aspect, it is desirable to use the first feature information in which face images imaged in similar environments are classified into the same cluster. The "environment" here indicates a difference or a reflection degree of a light source. For example, when the environment changes, the degree of the reflection of the light source may appear as a local change in a pixel value in a face image. Therefore, as an example of the first feature information, a local binary pattern (LBP) can be used. For example, in the LBP, a statistic value of a result of comparing a pixel value of a target pixel of an image with a pixel value of a pixel around the target pixel is used as a feature. Specifically, each pixel of the face image is selected as a target pixel in a predetermined order, a magnitude comparison result between the target pixel and peripheral pixels, for example, 8-neighbor adjacent pixels is binarized for each target pixel, and a pattern of binary data of the entire face image is extracted as an LBP.

The second extraction unit 12B is a processing unit that extracts second feature information from the face image input by the input unit 11. Here, the second feature information can select image feature information according to a nature of an attribute to be classified, from an aspect to be used for attribute estimation. As one aspect, a type of a feature different from the first feature information can be used as the second feature information. For example, in a case where luminance information such as the LBP is used as the first feature information, a texture feature expressing texture of an object or the like can be used as the second feature information.

The division unit 13 is a processing unit that divides a set of the first feature information into a plurality of clusters. Merely as an example, the division unit 13 can apply clustering, so-called cluster analysis to the set of the first feature information. The group label does not necessarily need to be used for such clustering.

Here, among various types of algorithms of clustering, hierarchical clustering in which the number of divisions is not determined in advance can be used. For example, in the hierarchical clustering, an operation is repeated for generating N clusters to which only one piece of the first feature information belongs as an initial value and generating a new cluster by coupling clusters having the largest similarity of the first feature information with each other. At this time, a threshold T1 of the similarity between clusters is determined in advance, and repetition processing ends when all the similarities between the clusters fall below the threshold. As a result, while face images acquired in similar environments are classified into the same cluster as each other, face images acquired in non-similar environments are classified into clusters different from each other. In this way, by using the hierarchical clustering that does not need to determine the number of divisions in advance, even if a face image acquired in any environment is included in the training data, a clustering result in which a cluster is formed for each similar environment can be obtained. Note that the similarity between the clusters is not limited to a specific one. For example, a distance or a cosine similarity between gravity centers of the first feature information in each cluster, a distance or a cosine similarity between the pieces of first feature information belonging to the cluster, a method for using a statistic value such as a total sum, or an average value, or the like can be used as the similarity between the clusters.

Hereinafter, the cluster obtained as the clustering result may be referred to as an "environmental cluster".

After the environmental cluster described above is obtained, the division unit 13 can calculate representative information of the environmental cluster using the first feature information, for each environmental cluster. For example, as the representative information of the environmental cluster, the center of gravity of the first feature information belonging to the environmental cluster can be used. The representative information calculated for each environmental cluster in this way is saved in an environmental cluster storage unit 33A of the identification device 30 to be described later.

A plurality of pieces of the representative information of the environmental cluster may be held for each environmental cluster. For example, in the hierarchical clustering, a cluster that is generated in a case where a threshold of a distance, at which processing for repeating coupling between clusters ends, is set to D2 (D1 > D2) is extracted as a subcluster. Because a magnitude relationship D1 > D2 is satisfied, the number of subclusters is larger than the number of environmental clusters. Therefore, according to the algorithm of the hierarchical clustering, each subcluster is contained in any one of the environmental clusters. The center of gravity of the first feature information of these subclusters can be held as representative information of the environmental cluster containing the subcluster.

The generation unit 14 is a processing unit that generates a group identification model for each environmental cluster. Merely as an example, the group estimation model can be generated, for example, by any machine learning algorithm such as a neural network, a support vector machine, or a random forest.

Specifically, the generation unit 14 executes the following processing for each environmental cluster. For example, the generation unit 14 extracts second feature information corresponding to the first feature information belonging to the environmental cluster, of the second feature information extracted by the second extraction unit 12B for each face image. Subsequently, the generation unit 14 divides the second feature information and a group label added to the face image that is an extraction source of the second feature information into training data and test data.

Then, the generation unit 14 performs machine learning of the group identification model using the training data. For example, in a case of a neural network or deep learning, parameters such as a weight or a bias of each layer of a model are trained. Furthermore, in a case of a support vector machine, an identification function is trained. As a result, the "group identification model" that outputs the group label or a certainty corresponding to the number of types of group labels using the face image or the second feature information as an input is trained. At the time of training such a group identification model, the training data may be further divided into training data used to update a parameter of a model and verification data used to update a hyperparameter of a model, for example, a layer structure, a training rate, or the like. Note that, in a case where a model is selected from among a plurality of models using the verification data, division into the training data and the verification data can be performed according to cross validation or the like.

Thereafter, the generation unit 14 inputs the second feature information included in the test data into a trained group identification model. Subsequently, the generation unit 14 calculates a resolution of the group identification model, based on a comparison result indicating consistence or inconsistence between the group label output by the group identification model for each piece of the second feature information or the certainty for each group label and a correct group label added to the second feature information. For example, as an example of the resolution of the group identification model, a correct answer rate of the test data can be adopted.

Various types of information regarding the group identification model generated for each environmental cluster in this way, for example, model information such as a layer structure, a weight, or a bias of the model, a resolution of the group identification model, or the like is saved in a model storage unit 34A of the identification device 30 to be described later.

Here, an example has been described in which all the pieces of second feature information included in the training data is used at the time of training the group estimation model described above. However, the second feature information belonging to the environmental cluster can be selectively used. The environmental cluster may include very similar images such as the same scene of the same person, and there is little need to use all these very similar images when the group estimation model is generated. Therefore, in a case where a distance threshold D3 (D1 > D3) is determined and there is a combination of the first feature information less than the threshold D3, the group estimation model is generated by excluding at least one or more of these combinations. In this way, by using the minimum number of face images, a cost reduction effect can be obtained.

Specifically, the generation unit 14 calculates a distance between the pieces of first feature information corresponding to each combination of the first feature information corresponding to the second feature information divided into the training data, among the first feature information belonging to the environmental cluster. Then, the generation unit 14 executes the following processing for each combination of the first feature information. For example, the generation unit 14 determines whether or not the distance between the pieces of the first feature information is less than the predetermined threshold D3 (D1 > D3). At this time, in a case where the distance is less than the threshold D3, there is a high possibility that a contribution to the model parameter update is small. Therefore, the generation unit 14 deletes the second feature information corresponding to one first feature information in the combination of the first feature information of which the distance is less than the threshold D3 from the training data. As a result, the number of times of training is reduced while suppressing an effect on model accuracy. On the other hand, in a case where the distance is less than the threshold D3, there is a high possibility that the contribution to the model parameter update is not small. In this case, the generation unit 14 skips the deletion of the second feature information from the training data.

### [Configuration of Identification Device 30]

Next, a functional configuration of the identification device 30 according to the present embodiment will be described. As illustrated in FIG. 1, the identification device 30 includes an acquisition unit 31, a feature extraction unit 32, the environmental cluster storage unit 33A, an attribution degree calculation unit 33, a model storage unit 34A, a model operation unit 34, and an identification unit 35. Note that the identification device 30 may include various functional units included in a known computer in addition to the functional units illustrated in FIG. 1, for example, functional units such as various input devices or audio output devices.

The functional units illustrated in FIG. 1, for example, the functional units such as the acquisition unit 31, the feature extraction unit 32, the attribution degree calculation unit 33, the model operation unit 34, or the identification unit 35 are virtually realized by the following hardware processor, merely as an example. As an example of such a processor, a CPU, a MPU, or the like is exemplified. Not limited to these general-purpose processors, a DLU, a GPGPU, a GPU cluster, or the like may be used. For example, the processor develops the identification program described above as a process on a memory such as a RAM so that the functional units described above are virtually realized. Here, as an example of the processor, the DLU, the GPGPU, the GPU cluster, the CPU, and the MPU are exemplified. However, the functional units described above may be realized by any processor regardless of whether the processor is a general-purpose type or specialized type. In addition, the functional unit described above is not prevented from being realized by a hard wired logic such as an ASIC or a FPGA.

Furthermore, a storage unit such as the environmental cluster storage unit 33A or the model storage unit 34A can be implemented as a storage, for example, an auxiliary storage device such as an HDD, an optical disk, or an SSD or can be implemented by allocating a part of a storage region of the storage.

The acquisition unit 31 is a processing unit that acquires a face image. Merely as an example, the acquisition unit 31 can activate the group identification function described above under a condition that an input of the face image is received. As a result, inference of group identification using a group identification model starts. In this way, the acquisition unit 31 acquires a face image to which a group label is not added, from an aspect that is an inference phase. Hereinafter, the face image acquired by the acquisition unit 31 may be referred to as an "input face image".

As one aspect, an information source of the face image may be arbitrary. For example, the face image can be received via a user interface (not illustrated) or a communication interface (not illustrated) or may be acquired from an internal storage or a removable medium (not illustrated).

As another aspect, the acquisition unit 31 does not necessarily need to acquire the face image itself. For example, the acquisition unit 31 can acquire a captured image captured by an imaging device. In this case, the acquisition unit 31 can acquire the face image by detecting a face in the captured image and cutting a partial image corresponding to a face region obtained through face detection as the face image. Moreover, the acquisition unit 31 does not necessarily need to acquire a still image as the captured image described above or can acquire a moving image. In a case where the moving image is acquired in this way, inference of group identification may be performed using a group identification model in a frame unit of the captured image.

The feature extraction unit 32 is a processing unit that extracts feature information from the face image acquired by the acquisition unit 31. As illustrated in FIG. 1, the feature extraction unit 32 includes a first extraction unit 32A and a second extraction unit 32B. The first extraction unit 32A and the second extraction unit 32B have the same functions as the first extraction unit 12A and the second extraction unit 12B of the generation device 10 illustrated in FIG. 1. Although details will be omitted from an aspect of avoiding overlapped description, while the first extraction unit 12A extracts an LBP feature as an example of the first feature information from the face image, the second extraction unit 12B extracts a texture feature as an example of the second feature information from the face image.

The attribution degree calculation unit 33 is a processing unit that calculates an attribution degree indicating a degree at which an input face image belongs to the environmental cluster for each environmental cluster. The "attribution degree" here corresponds to an example of similarity information. As an embodiment, the attribution degree calculation unit 33 calculates an attribution degree for each environmental cluster based on the first feature information extracted from the input face image by the first extraction unit 32A and the representative information of the environmental cluster stored in the environmental cluster storage unit 33A. Merely as an example, a case will be described in which the center of gravity of the first feature information belonging to the environmental cluster is used as the representative information of the environmental cluster. In this case, the attribution degree calculation unit 33 can calculate a reciprocal of a distance between the input face image and the center of gravity of the first feature information in each environmental cluster as the attribution degree of each environmental cluster. By calculating the reciprocal of the distance therebetween in this way, normalization can be realized in which, as the distance from the center of gravity of the environmental cluster is shorter, in other words, as the similarity is larger, an index value of the attribution degree increases.

Note that, here, merely as an example, an example has been described in which one piece of the representative information is used for calculation of the attribution degree of the environmental cluster, for one environmental cluster. However, the plurality of pieces of representative information can be used for the calculation of the attribution degree of the environmental cluster, for one environmental cluster. For example, in a case where the plurality of pieces of environmental cluster representative information is held by the environmental cluster storage unit 33A, a statistical value such as an average value, a minimum value, or a maximum value of a distance or a similarity can be calculated as the attribution degree of the environmental cluster.

The model operation unit 34 is a processing unit that operates the group identification model for each environmental cluster. As an embodiment, the model operation unit 34 develops the group identification model for each environmental cluster on a memory (not illustrated) according to the model information stored in the model storage unit 34A. Then, the model operation unit 34 operates the group identification model of each environmental cluster by inputting the second feature information extracted from the input face image by the second extraction unit 32B into the group identification model of each environmental cluster. As a result, the group identification model of each environmental cluster outputs scores such as a likelihood, a certainty, or a generation probability of each group label.

Hereinafter, from an aspect of distinguishing a label of the score output by the group identification model and a score calculated by the identification unit 35 to be described later, the former may be referred to as a "first score", and the latter may be referred to as a "second score". Note that the first score corresponds to merely an example of a first estimated value. The first estimated value is not limited to the first score and may be a group label itself as described later in detail.

Note that the attribution degree calculation unit 33 and the model operation unit 34 may correspond to an example of a first generation unit.

The identification unit 35 is a processing unit that identifies a group label of an input face image. The "identification unit" here may correspond to an example of a second generation unit. As merely one aspect, the identification unit 35 calculates the second score for each group label based on the attribution degree calculated for each environmental cluster by the attribution degree calculation unit 33 and the first score for each group label obtained from the group identification model corresponding to each environmental cluster.

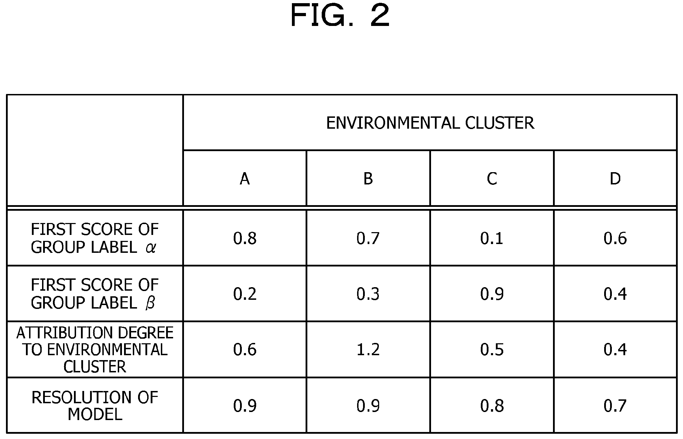

FIG. 2 is a diagram illustrating an example of the first score for each group label. In FIG. 2, an example is illustrated in which a group identification model is generated for each four environmental clusters including environmental clusters A to D obtained as a clustering result of the first feature information in a machine learning (training) phase of the group identification model. Moreover, an example is illustrated in which the group identification model corresponding to the environmental cluster for each four environmental clusters including the environmental clusters A to D classifies the input face image into two classes including a group α and a group β. In the example illustrated in FIG. 2, the identification unit 35 can calculate the second score for each group label as follows. Merely as an example, a weight corresponding to the attribution degree of each environmental cluster of the input face image is added to the first score for each group label obtained from the group identification model corresponding to each environmental cluster, and a total sum of the weights of the first scores of the respective environmental clusters is calculated for each group label as the second score.

More specifically, to a first score "0.8" of the group label "group α" and a first score "0.2" of the group label "group β" output from the group identification model corresponding to the environmental cluster A, an attribution degree "0.6" to the environmental cluster A is added as a weight. Furthermore, to a first score "0.7" of the group label "group α" and a first score "0.3" of the group label "group β" output from the group identification model corresponding to the environmental cluster B, an attribution degree "1.2" to the environmental cluster B is added as a weight. Moreover, to a first score "0.1" of the group label "group α" and a first score "0.9" of the group label "group β" output from the group identification model corresponding to the environmental cluster C, an attribution degree "0.5" to the environmental cluster C is added as a weight. Furthermore, to a first score "0.6" of the group label "group α" and a first score "0.4" of the group label "group β" output from the group identification model corresponding to the environmental cluster D, an attribution degree "0.4" to the environmental cluster A is added as a weight.

Then, the first scores for the respective environmental clusters to which the weight corresponding to the attribution degree of each environmental cluster of the input face image is added are summed for each group label across the respective environmental clusters. For example, in the example of the group label "group α", a total sum "1.61" of weighting "0.8 × 0.6" of the first score of the environmental cluster A, weighting "0.7 × 1.2" of the first score of the environmental cluster B, weighting "0.1 × 0.5" of the first score of the environmental cluster C, and weighting "0.6 × 0.4" of the first score of the environmental cluster D is calculated as the second score. On the other hand, in the example of the group label "group β", a total sum "1.09" of weighting "0.2 × 0.6" of the first score of the environmental cluster A, weighting "0.3 × 1.2" of the first score of the environmental cluster B, weighting "0.9 × 0.5" of the first score of the environmental cluster C, and weighting "0.4 × 0.4" of the first score of the environmental cluster D is calculated as the second score. As a result, the second score "1.61" of the group label "group α" and the second score "1.09" of the group label "group β" are obtained.

Based on the second score obtained for each group label in this way, the identification unit 35 can identify the group label of the input face image. Merely as an example, the identification unit 35 can select a group label having the largest second score from among the group labels, as the group label of the input face image. For example, in the example described above, the second score "1.61" of the group label "group α" > the second score "1.09" of the group label "group β" is satisfied. Therefore, the group label of the input face image is identified as the "group α".

As another aspect, an example has been described in which the identification unit 35 adds the weight corresponding to the attribution degree of each environmental cluster of the input face image. However, a weight corresponding to the resolution of the group identification model stored for each environmental cluster into the environmental cluster storage unit 33A can be further added.

In the example illustrated in FIG. 2, to the first score "0.8" of the group label "group α" and the first score "0.2" of the group label "group β" output from the group identification model corresponding to the environmental cluster A, the attribution degree "0.6" to the environmental cluster A and the resolution "0.9"of the group identification model corresponding to the environmental cluster A are added as weights. Furthermore, to the first score "0.7" of the group label "group α" and the first score "0.3" of the group label "group β" output from the group identification model corresponding to the environmental cluster B, the attribution degree "1.2" to the environmental cluster B and the resolution "0.9" of the group identification model corresponding to the environmental cluster B are added as weights. Moreover, to the first score "0.1" of the group label "group α" and the first score "0.9" of the group label "group β" output from the group identification model corresponding to the environmental cluster C, the attribution degree "0.5" to the environmental cluster C and the resolution "0.8" of the group identification model corresponding to the environmental cluster C are added as weights. Furthermore, to the first score "0.6" of the group label "group α" and the first score "0.4" of the group label "group β" output from the group identification model corresponding to the environmental cluster D, the attribution degree "0.4" to the environmental cluster A and the resolution "0.7" of the group identification model corresponding to the environmental cluster D are added as weights.

In a case where the weight corresponding to the resolution of the group identification model corresponding to each environmental cluster is further added in this way, the second score of each group label is calculated as follows. For example, as in the example of the group label "group α", a total sum "1.396" of weighting "0.8 × 0.6 × 0.9" of the first score of the environmental cluster A, weighting "0.7 × 1.2 × 0.9" of the first score of the environmental cluster B, weighting "0.1 × 0.5 × 0.8" of the first score of the environmental cluster C, and weighting "0.6 × 0.4 × 0.7" of the first score of the environmental cluster D is calculated as the second score. On the other hand, in the example of the group label "group β", a total sum "0.904" of weighting "0.2 × 0.6 × 0.9" of the first score of the environmental cluster A, weighting "0.3 × 1.2 × 0.9" of the first score of the environmental cluster B, weighting "0.9 × 0.5 × 0.8" of the first score of the environmental cluster C, and weighting "0.4 × 0.4 × 0.7" of the first score of the environmental cluster D is calculated as the second score. As a result, the second score "1.396" of the group label "group α" and the second score "0.904" of the group label "group β" are obtained.

In this case, the second score "1.396" of the group label "group α" > the second score "0.904" of the group label "group β" is satisfied. Therefore, the group label of the input face image is identified as the "group α".

### [Flow of Processing]

Next, a flow of processing of the system according to the present embodiment will be described. Here, (1) after an overall flow of the generation device 10 is described, (2) a subflow of the generation device 10 is described, and (3) an overall flow of the identification device 30 is described.

### (1) Overall Flow of Generation Device 10

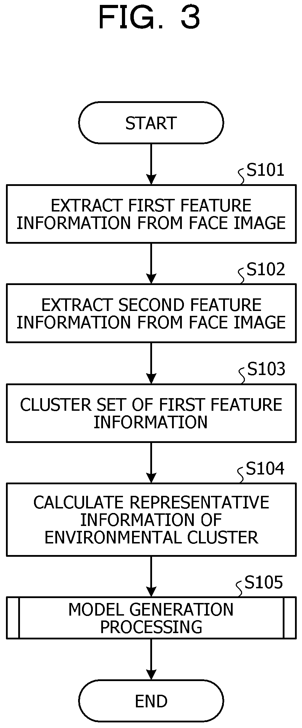

FIG. 3 is a diagram illustrating an example of the overall flow of the generation device 10 according to the first embodiment. Processing illustrated in FIG. 3 can be started at any timing when a face image with a group label is input. As illustrated in FIG. 3, the first extraction unit 12A extracts first feature information from a face image input by the input unit 11 (step S101). Furthermore, the second extraction unit 12B extracts second feature information from the face image input by the input unit 11 (step S102).

Thereafter, the division unit 13 clusters the set of the first feature information extracted in step S101 (step S103). Then, for each environmental cluster obtained as a clustering result in step S103, the division unit 13 calculates representative information of the environmental cluster using the first feature information belonging to the environmental cluster (step S104). Then, the generation unit 14 executes "model generation processing" for generating a group identification model for each environmental cluster (step S105) and ends the processing.

### (2) Subflow of Generation Device 10

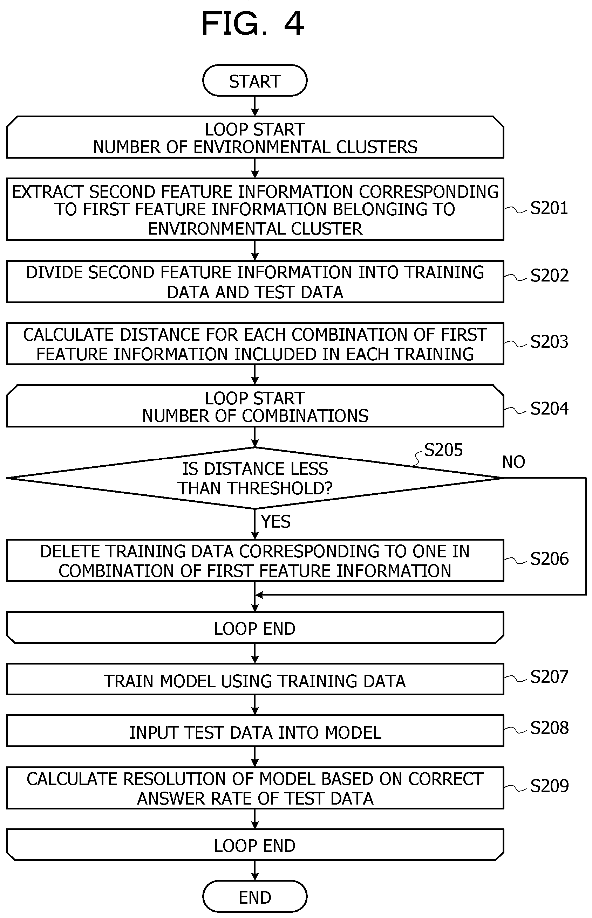

FIG. 4 is a diagram illustrating an example of the subflow of the generation device 10 according to the first embodiment. Processing illustrated in FIG. 4 corresponds to the processing in step S104 illustrated in FIG. 3. As illustrated in FIG. 4, the generation unit 14 repeats processing in steps S201 to S209 below for the number of times corresponding to the number of environmental clusters.

In other words, the generation unit 14 extracts the second feature information corresponding to the first feature information belonging to the environmental cluster, from among the second feature information extracted for each face image in step S102 (step S201). Subsequently, the generation unit 14 divides the second feature information extracted in step S201 and a group label added to the face image that is the extraction source of the second feature information into training data and test data (step S202).

Then, the generation unit 14 calculates a distance between pieces of the first feature information corresponding to each combination of the first feature information corresponding to the second feature information divided into the training data in step S202, among the first feature information belonging to the environmental cluster (step S203).

Thereafter, the generation unit 14 executes processing in steps S205 and S206 below, for the number of times corresponding to the number of combinations of the first feature information. In other words, the generation unit 14 determines whether or not the distance between the pieces of the first feature information is less than the predetermined threshold D3 (D1 > D3) (step S205).

At this time, in a case where the distance is less than the threshold D3 (Yes in step S205), there is a high possibility that a contribution to model parameter update is small. Therefore, the generation unit 14 deletes the second feature information corresponding to one first feature information in the combination of the first feature information of which the distance is less than the threshold D3 from the training data (step S206). As a result, the number of times of training is reduced while suppressing an effect on model accuracy.

On the other hand, in a case where the distance is less than the threshold D3 (No in step S205), there is a high possibility that the contribution to the model parameter update is not small. In this case, the generation unit 14 skips the deletion of the second feature information from the training data.

Thereafter, the generation unit 14 performs machine learning of the group identification model using the training data divided in step S202 for each environmental cluster obtained as the clustering result in step S103 (step S207). As a result, the "group identification model" that outputs the group label or a certainty corresponding to the number of types of group labels using the face image or the second feature information as an input is trained.

Thereafter, the generation unit 14 inputs the second feature information included in the test data divided in step S202 into the trained group identification model (step S208). Subsequently, the generation unit 14 calculates a resolution of the group identification model, based on a comparison result indicating consistence or inconsistence between a certainty for each group label output by the group identification model for each piece of the second feature information and a correct group label added to the second feature information (step S209).

Various types of information regarding the group identification model generated for each environmental cluster in this way, for example, model information such as a layer structure, a weight, or a bias of the model, a resolution of the group identification model, or the like is saved in a model storage unit 34A of the identification device 30 to be described later.

### (3) Overall Flow of Identification Device 30

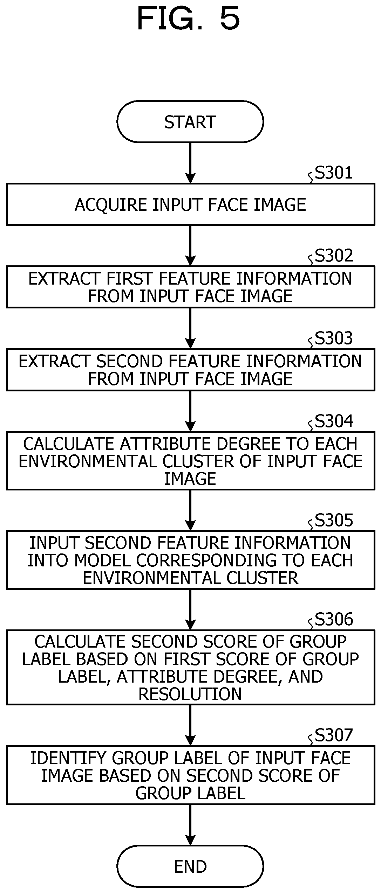

FIG. 5 is a diagram illustrating an example of the overall flow of the identification device 30 according to the first embodiment. Processing illustrated in FIG. 5 can be started at any timing when an input face image is acquired. As illustrated in FIG. 5, when the acquisition unit 31 acquires an input face image (step S301), the first extraction unit 32A extracts first feature information from the face image acquired in step S301 (step S302). Furthermore, the second extraction unit 32B extracts second feature information from the face image acquired in step S301 (step S303).

Subsequently, the attribution degree calculation unit 33 calculates an attribution degree for each environmental cluster based on the first feature information extracted from the input face image in step S302 and the representative information of the environmental cluster stored in the environmental cluster storage unit 33A (step S304).

Then, the model operation unit 34 operates the group identification model of each environmental cluster by inputting the second feature information extracted from the input face image in step S303 into the group identification model of each environmental cluster (step S305).

Thereafter, the identification unit 35 calculates a second score for each group label based on the attribution degree calculated for each environmental cluster in step S304, the first score for each group label obtained from the group identification model corresponding to each environmental cluster, and the resolution of the group identification model stored for each environmental cluster in the environmental cluster storage unit 33A (step S306).

Then, the identification unit 35 identifies the group label of the input face image based on the second score calculated for each group label in step S306 (step S307) and ends the processing.

### [One Aspect of Effects]

As described above, the group identification function according to the present embodiment calculates the second score for each group label based on the attribution degree to each environmental cluster calculated from the input face image and the first score for each group label output from the model corresponding to each environmental cluster. Therefore, a model output corresponding to an unknown environment can be reproduced by blending model outputs in the known environment. Therefore, according to the group identification function according to the present embodiment, it is possible to suppress a decrease in accuracy of group identification in the unknown environment.

### [Second Embodiment]

Incidentally, while the embodiment related to the disclosed device has been described above, the present invention may be carried out in a variety of different modes in addition to the embodiment described above. Thus, hereinafter, another embodiment included in the present invention will be described.

### [Application Example of Model Output]

In the first embodiment described above, an example has been described in which the group identification model outputs the first score for each group label. However, it does not necessarily need to output the score from the group identification model. For example, the group identification model may output the group label. In this case, a group label output by a group identification model of an environmental cluster of which an attribution degree is equal to or higher than a predetermined standard is valid, a group label output by a group identification model of an environmental cluster of which an attribution degree is less than the standard is invalid, and the number of model outputs of which the type of the group label is valid is aggregated for each type of the group label. Then, by a majority vote of the aggregated value obtained for each type of the group label, it is possible to determine a type of a group label with the largest aggregated value as the group label of the input face image. Merely as an example, a case will be described as an example in which +the group identification model performs authenticity determination for outputting a group label of either one of true or false. At this time, when it is assumed that an aggregated value of model outputs of which the group label "true" is valid be "3" and an aggregated value of model outputs of which the group label "false" is valid be "1", the aggregated value "3" of the number of model outputs of "true" > the aggregated value "1" of the number of model outputs "false" is satisfied. Therefore, the group label of the input face image is determined as "true".

### [Distribution and Integration]

Furthermore, each of the illustrated components in each of the devices does not necessarily have to be physically configured as illustrated in the drawings. In other words, specific modes of distribution and integration of the individual devices are not limited to those illustrated, and all or a part of the devices may be configured by being functionally or physically distributed and integrated in an optional unit depending on various loads, use situations, and the like. For example, the generation device 10 and the identification device 30 can be integrated into a single device. Furthermore, the input unit 11, the feature extraction unit 12, the division unit 13, or the generation unit 14 may be connected via a network as an external device of the generation device 10. Furthermore, each of the input unit 11, the feature extraction unit 12, the division unit 13, or the generation unit 14 may be included in another device and be connected via the network to cooperate with each other, and accordingly, the functions of the generation device 10 described above may be realized. Furthermore, the acquisition unit 31, the feature extraction unit 32, the attribution degree calculation unit 33, the model operation unit 34, or the identification unit 35 may be connected via a network as an external device of the identification device 30. Furthermore, each of the acquisition unit 31, the feature extraction unit 32, the attribution degree calculation unit 33, the model operation unit 34, and the identification unit 35 may be included in another device and be connected via the network to cooperate with each other, and accordingly, the functions of the generation device 10 described above may be realized. Furthermore, all or a part of the information stored in each of the environmental cluster storage unit 33A and the model storage unit 34A may be included in another device and be connected via the network to cooperate with each other, and accordingly, the functions of the identification device 30 described above may be realized.

### [Identification Program]

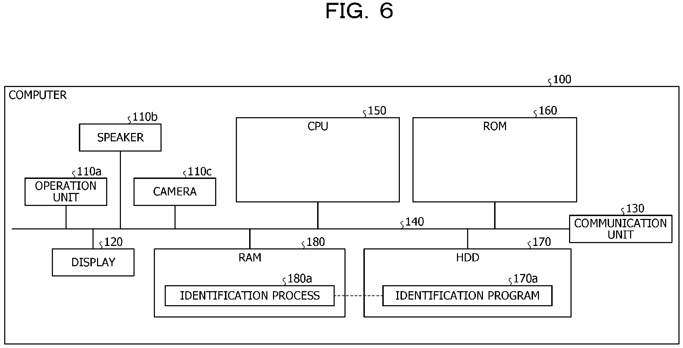

Furthermore, various types of processing described in the embodiments described above may be implemented by executing a program prepared in advance by a computer such as a personal computer or a workstation. Therefore, in the following, an example of a computer that executes the identification program according to the first and second embodiments will be described with reference to FIG. 6.

FIG. 6 is a diagram illustrating a hardware configuration example of the computer. As illustrated in FIG. 6, a computer 100 includes an operation unit 110a, a speaker 110b, a camera 110c, a display 120, and a communication unit 130. Moreover, the computer 100 includes a CPU 150, a ROM 160, an HDD 170, and a RAM 180. These individual units 110 to 180 are connected via a bus 140.

As illustrated in FIG. 6, the HDD 170 stores an identification program 170a that achieves functions similar to the acquisition unit 31, the feature extraction unit 32, the attribution degree calculation unit 33, the model operation unit 34, and the identification unit 35 described in the first embodiment above. This identification program 170a may be integrated or separated similarly to each component of the acquisition unit 31, the feature extraction unit 32, the attribution degree calculation unit 33, the model operation unit 34, and the identification unit 35 illustrated in FIG. 1. In other words, all pieces of data indicated in the first embodiment described above do not necessarily have to be stored in the HDD 170, and it is sufficient that data for use in processing be stored in the HDD 170.

Under such an environment, the CPU 150 reads the identification program 170a from the HDD 170, and develops the identification program 170a in the RAM 180. As a result, the identification program 170a functions as an identification process 180a as illustrated in FIG. 6. The identification process 180a develops various types of data read from the HDD 170 in a region allocated to the identification process 180a in a storage region included in the RAM 180, and executes various types of processing by using the various types of developed data. For example, as an example of the processing to be executed by the identification process 180a, the processing illustrated in FIG. 5 or the like is included. Note that all the processing units indicated in the first embodiment described above do not necessarily operate in the CPU 150, and it is sufficient that a processing unit corresponding to processing to be executed is virtually implemented.

Note that the identification program 170a described above does not necessarily have to be stored in the HDD 170 or the ROM 160 from the beginning. For example, each program is stored in a "portable physical medium" such as a flexible disk, which is a so-called FD, CD-ROM, DVD disk, magneto-optical disk, or IC card to be inserted into the computer 100. Then, the computer 100 may acquire each program from these portable physical media and execute each program. Furthermore, each program may be stored in another computer, server device, or the like connected to the computer 100 via a public line, the Internet, a LAN, a WAN, or the like, and the computer 100 may acquire each program from them to execute the program.

### REFERENCE SIGNS LIST

- 10: generation device
- 11: input unit
- 12: feature extraction unit
- 12A: first extraction unit
- 12B: second extraction unit
- 13: division unit
- 14: generation unit
- 30: identification device
- 31: acquisition unit
- 32: feature extraction unit
- 32A: first extraction unit
- 32B: second extraction unit
- 33: attribution degree calculation unit
- 34: model operation unit
- 35: identification unit

## Claims

1. An identification method for a computer to execute a process comprising:
generating each of a plurality of first estimated values regarding an attribute of a face image by using a plurality of estimation models that generates a first estimated value regarding the attribute of the face image from the face image, each of the plurality of first estimated values being a score of a label regarding the attribute, the attribute being one selected from a gender, an age, a pupil color, of the face image;
generating a plurality of pieces of similarity information that indicates a similarity between a local binary pattern of the face image and a plurality of pieces of local binary patterns respectively associated with the plurality of estimation models; and
generating a second estimated value regarding the attribute of the face image, based on the plurality of first estimated values and the plurality of pieces of similarity information, the second estimated value being a total sum of the plurality of first estimated values to which a weight that corresponds to each similarity included in the plurality of pieces of similarity information is added.

2. The identification method according to claim 1, wherein a texture feature extracted from the face image is input to the plurality of estimation models.

3. The identification method according to claim 1, wherein the second estimated value is a total sum of the plurality of first estimated values to which a weight that corresponds to each similarity included in the plurality of pieces of similarity information and a weight that corresponds to each resolution of each of the plurality of estimation models are added.

4. The identification method according to claim 1, wherein the process further comprising:
acquiring a plurality of pieces of training data each of which includes the face image and the attribute of the face image;
classifying the plurality of pieces of training data into a plurality of clusters, based on the plurality of local binary patterns of a plurality of face images respectively included in the plurality of pieces of training data; and
generating the plurality of estimation models by performing machine learning with training data included in each cluster, for each cluster included in the plurality of clusters.

5. The identification method according to claim 1, wherein
the local binary pattern indicated in the first estimated values is one selected from a difference of a light source of the image and a reflection degree of the light source.

6. An identification program that causes at least one computer to execute a process, the process comprising:
generating each of a plurality of first estimated values regarding an attribute of a face image by using a plurality of estimation models that generates a first estimated value regarding the attribute of the face image from the face image, each of the plurality of first estimated values being a score of a label regarding the attribute, the attribute being one selected from a gender, an age, a pupil color, of the face image;
generating a plurality of pieces of similarity information that indicates a similarity between a local binary pattern of the face image and a plurality of pieces of local binary patterns respectively associated with the plurality of estimation models; and
generating a second estimated value regarding the attribute of the face image, based on the plurality of first estimated values and the plurality of pieces of similarity information, the second estimated value being a total sum of the plurality of first estimated values to which a weight that corresponds to each similarity included in the plurality of pieces of similarity information is added.

7. The identification program according to claim 6, wherein a texture feature extracted from the face image is input to the plurality of estimation models.

8. An identification device (30) comprising:
a first generation unit (33, 34) configured to
generate each of a plurality of first estimated values regarding an attribute of a face image by using a plurality of estimation models that generates a first estimated value regarding the attribute of the face image from the face image, each of the plurality of first estimated values being a score of a label regarding the attribute, the attribute being one selected from a gender, an age, a pupil color, of the face image, and
generate a plurality of pieces of similarity information that indicates a similarity between a local binary pattern of the face image and a plurality of pieces of local binary patterns respectively associated with the plurality of estimation models; and
a second generation unit (35) configured to
generate a second estimated value regarding the attribute of the face image, based on the plurality of first estimated values and the plurality of pieces of similarity information, the second estimated value being a total sum of the plurality of first estimated values to which a weight that corresponds to each similarity included in the plurality of pieces of similarity information is added.

9. The identification device (30) according to claim 8, wherein a texture feature extracted from the face image is input to the plurality of estimation models.

## Patentansprüche

1. Identifikationsverfahren eines Computers zur Ausführung eines Prozesses, umfassend:
Erzeugen jedes einer Vielzahl von ersten geschätzten Werten in Bezug auf ein Attribut eines Gesichtsbildes unter Verwendung einer Vielzahl von Schätzmodellen, die einen ersten geschätzten Wert in Bezug auf das Attribut des Gesichtsbildes aus dem Gesichtsbild erzeugen, wobei jeder der Vielzahl von ersten geschätzten Werten ein Ergebnis einer Kennzeichnung in Bezug auf das Attribut ist, wobei das Attribut eines ist, das aus einem Geschlecht, einem Alter oder einer Pupillenfarbe des Gesichtsbildes ausgewählt ist;
Erzeugen einer Vielzahl von Ähnlichkeitsinformationen, die eine Ähnlichkeit zwischen einem lokalen binären Muster des Gesichtsbildes und einer Vielzahl von Teilen lokaler binärer Muster, die jeweils mit der Vielzahl von Schätzmodellen verbunden sind, anzeigen; und
Erzeugen eines zweiten geschätzten Wertes bezüglich des Attributs des Gesichtsbildes, basierend auf der Vielzahl von ersten geschätzten Werten und der Vielzahl von Ähnlichkeitsinformationen, wobei der zweite geschätzte Wert eine Gesamtsumme der Vielzahl von ersten geschätzten Werten ist, zu der ein Gewicht, das jeder in der Vielzahl von Ähnlichkeitsinformationen eingeschlossenen Ähnlichkeit entspricht, addiert wird.

2. Identifikationsverfahren nach Anspruch 1, wobei ein aus dem Gesichtsbild extrahiertes Texturmerkmal in die Vielzahl von Schätzmodellen eingegeben wird.

3. Identifikationsverfahren nach Anspruch 1, wobei der zweite Schätzwert eine Gesamtsumme der Vielzahl von ersten Schätzwerten ist, zu der ein Gewicht gehört, das jeder in der Vielzahl von Ähnlichkeitsinformationen eingeschlossenen Ähnlichkeit entspricht, und ein Gewicht, das jeder Auflösung jedes der Vielzahl von Schätzmodellen entspricht, addiert werden.

4. Identifikationsverfahren nach Anspruch 1, wobei das Verfahren weiter umfasst:
Erfassen einer Vielzahl von Trainingsdaten, von denen jede das Gesichtsbild und das Attribut des Gesichtsbildes einschließt;
Klassifizieren der Vielzahl von Trainingsdaten in eine Vielzahl von Clustern, basierend auf der Vielzahl von lokalen binären Mustern einer Vielzahl von Gesichtsbildern, die jeweils in der Vielzahl von Trainingsdaten eingeschlossen sind; und
Erzeugen der Vielzahl von Schätzmodellen durch Ausführen von maschinellem Lernen mit Trainingsdaten, die in jedem Cluster eingeschlossen sind, für jeden in der Vielzahl von Clustern eingeschlossenen Cluster.

5. Identifikationsverfahren nach Anspruch 1, wobei
das in den ersten geschätzten Werten angegebene lokale binäre Muster eines ist, das aus einer Differenz einer Lichtquelle des Bildes und einem Reflexionsgrad der Lichtquelle ausgewählt ist.

6. Identifikationsprogramm, das mindestens einen Computer veranlasst, einen Prozess auszuführen, wobei der Prozess umfasst:
Erzeugen jedes einer Vielzahl von ersten geschätzten Werten in Bezug auf ein Attribut eines Gesichtsbildes unter Verwendung einer Vielzahl von Schätzmodellen, die einen ersten geschätzten Wert in Bezug auf das Attribut des Gesichtsbildes aus dem Gesichtsbild erzeugen, wobei jeder der Vielzahl von ersten geschätzten Werten ein Ergebnis einer Kennzeichnung in Bezug auf das Attribut ist, wobei das Attribut eines ist, das aus einem Geschlecht, einem Alter oder einer Pupillenfarbe des Gesichtsbildes ausgewählt ist;
Erzeugen einer Vielzahl von Ähnlichkeitsinformationen, die eine Ähnlichkeit zwischen einem lokalen binären Muster des Gesichtsbildes und einer Vielzahl von Teilen lokaler binärer Muster, die jeweils mit der Vielzahl von Schätzmodellen verbunden sind, anzeigen; und
Erzeugen eines zweiten geschätzten Wertes bezüglich des Attributs des Gesichtsbildes, basierend auf der Vielzahl von ersten geschätzten Werten und der Vielzahl von Ähnlichkeitsinformationen, wobei der zweite geschätzte Wert eine Gesamtsumme der Vielzahl von ersten geschätzten Werten ist, zu der ein Gewicht, das jeder in der Vielzahl von Ähnlichkeitsinformationen eingeschlossenen Ähnlichkeit entspricht, addiert wird.

7. Identifikationsprogramm nach Anspruch 6, wobei ein aus dem Gesichtsbild extrahiertes Texturmerkmal in die Vielzahl von Schätzmodellen eingegeben wird.

8. Identifikationsvorrichtung (30), umfassend:
eine erste Erzeugungseinheit (33, 34), die konfiguriert ist, um
jeden einer Vielzahl von ersten geschätzten Werten in Bezug auf ein Attribut eines Gesichtsbildes unter Verwendung einer Vielzahl von Schätzmodellen zu erzeugen, die einen ersten geschätzten Wert in Bezug auf das Attribut des Gesichtsbildes aus dem Gesichtsbild erzeugt, wobei jeder der Vielzahl von ersten geschätzten Werten ein Ergebnis einer Kennzeichnung in Bezug auf das Attribut ist, wobei das Attribut eines ist, das aus einem Geschlecht, einem Alter oder einer Pupillenfarbe des Gesichtsbildes ausgewählt ist, und
eine Vielzahl von Ähnlichkeitsinformationen zu erzeugen, die eine Ähnlichkeit zwischen einem lokalen binären Muster des Gesichtsbildes und einer Vielzahl von Teilen von lokalen binären Mustern anzuzeigen, die jeweils mit der Vielzahl von Schätzmodellen verbunden sind; und
eine zweite Erzeugungseinheit (35), die konfiguriert ist, um
einen zweiten geschätzten Wert in Bezug auf das Attribut des Gesichtsbildes auf der Grundlage der Vielzahl von ersten geschätzten Werten und der Vielzahl von Ähnlichkeitsinformationen zu erzeugen, wobei der zweite geschätzte Wert eine Gesamtsumme der Vielzahl von ersten geschätzten Werten ist, zu der ein Gewicht, das jeder in der Vielzahl von Ähnlichkeitsinformationen eingeschlossenen Ähnlichkeit entspricht, addiert wird.

9. Identifikationsvorrichtung (30) nach Anspruch 8, wobei ein aus dem Gesichtsbild extrahiertes Texturmerkmal in die Vielzahl von Schätzmodellen eingegeben wird.

## Revendications

1. Procédé d'identification pour qu'un ordinateur exécute un processus comprenant :
la génération de chacune d'une pluralité de premières valeurs estimées concernant un attribut d'une image de visage en utilisant une pluralité de modèles d'estimation qui génèrent une première valeur estimée concernant l'attribut de l'image de visage à partir de l'image de visage, chacune de la pluralité de premières valeurs estimées étant un score d'une étiquette concernant l'attribut, l'attribut étant un sélectionné parmi un sexe, un âge, une couleur de pupille, de l'image de visage ;
la génération d'une pluralité d'éléments d'information de similarité qui indiquent une similarité entre un modèle binaire local de l'image de visage et une pluralité d'éléments de modèles binaires locaux respectivement associés à la pluralité de modèles d'estimation ; et
la génération d'une seconde valeur estimée concernant l'attribut de l'image de visage, sur la base de la pluralité de premières valeurs estimées et de la pluralité d'éléments d'information de similarité, la seconde valeur estimée étant une somme totale de la pluralité de premières valeurs estimées à laquelle est ajoutée une pondération qui correspond à chaque similarité incluse dans la pluralité d'éléments d'information de similarité.

2. Procédé d'identification selon la revendication 1, dans lequel une caractéristique de texture extraite de l'image de visage est entrée dans la pluralité de modèles d'estimation.

3. Procédé d'identification selon la revendication 1, dans lequel la seconde valeur estimée est une somme totale de la pluralité de premières valeurs estimées à laquelle sont ajoutés un poids qui correspond à chaque similarité incluse dans la pluralité d'éléments d'information de similarité et un poids qui correspond à chaque résolution de chacun de la pluralité de modèles d'estimation.

4. Procédé d'identification selon la revendication 1, dans lequel le processus comprend en outre :
l'acquisition d'une pluralité d'éléments de données d'entraînement dont chacune inclut l'image de visage et l'attribut de l'image de visage ;
la classification de la pluralité d'éléments de données d'entraînement en une pluralité de groupes, sur la base de la pluralité de modèles binaires locaux d'une pluralité d'images de visage respectivement incluses dans la pluralité d'éléments de données d'entraînement ; et
la génération de la pluralité de modèles d'estimation en réalisant un apprentissage automatique avec des données d'entraînement incluses dans chaque groupe, pour chaque groupe inclus dans la pluralité de groupes.

5. Procédé d'identification selon la revendication 1, dans lequel
le modèle binaire local indiqué dans les premières valeurs estimées est celui sélectionné à partir d'une différence d'une source lumineuse de l'image et d'un degré de réflexion de la source lumineuse.

6. Programme d'identification qui amène au moins un ordinateur à exécuter un processus, le processus comprenant :
la génération de chacune d'une pluralité de premières valeurs estimées concernant un attribut d'une image de visage en utilisant une pluralité de modèles d'estimation qui génèrent une première valeur estimée concernant l'attribut de l'image de visage à partir de l'image de visage, chacune de la pluralité de premières valeurs estimées étant un score d'une étiquette concernant l'attribut, l'attribut étant un sélectionné parmi un sexe, un âge, une couleur de pupille, de l'image de visage ;
la génération d'une pluralité d'éléments d'information de similarité qui indiquent une similarité entre un modèle binaire local de l'image de visage et une pluralité d'éléments de modèles binaires locaux respectivement associés à la pluralité de modèles d'estimation ; et
la génération d'une seconde valeur estimée concernant l'attribut de l'image de visage, sur la base de la pluralité de premières valeurs estimées et de la pluralité d'éléments d'information de similarité, la seconde valeur estimée étant une somme totale de la pluralité de premières valeurs estimées à laquelle est ajoutée une pondération qui correspond à chaque similarité incluse dans la pluralité d'éléments d'information de similarité.

7. Programme d'identification selon la revendication 6, dans lequel une caractéristique de texture extraite de l'image de visage est entrée dans la pluralité de modèles d'estimation.

8. Dispositif (30) d'identification comprenant :
une première unité de génération (33, 34) configurée pour
générer chacune d'une pluralité de premières valeurs estimées concernant un attribut d'une image de visage en utilisant une pluralité de modèles d'estimation qui génèrent une première valeur estimée concernant l'attribut de l'image de visage à partir de l'image de visage, chacune de la pluralité de premières valeurs estimées étant un score d'une étiquette concernant l'attribut, l'attribut étant un sélectionné parmi un sexe, un âge, une couleur de pupille, de l'image de visage, et
générer une pluralité d'éléments d'information de similarité qui indiquent une similarité entre un modèle binaire local de l'image de visage et une pluralité de modèles binaires locaux respectivement associés à la pluralité de modèles d'estimation ; et
une seconde unité de génération (35) configurée pour
générer une seconde valeur estimée concernant l'attribut de l'image de visage, sur la base de la pluralité de premières valeurs estimées et de la pluralité d'éléments d'information de similarité, la seconde valeur estimée étant une somme totale de la pluralité de premières valeurs estimées à laquelle est ajoutée une pondération qui correspond à chaque similarité incluse dans la pluralité d'éléments d'information de similarité.

9. Dispositif d'identification (30) selon la revendication 8, dans lequel une caractéristique de texture extraite de l'image de visage est entrée dans la pluralité de modèles d'estimation.
